# EUROPÄISCHE PATENTSCHRIFT

(11) **EP 3 672 713 B1**
(45) Veröffentlichungstag und Bekanntmachung des Hinweises auf die Patenterteilung: **05.05.2021**
(21) Anmeldenummer: 18756203.8
(22) Anmeldetag: 15.08.2018
(51) Int. Cl.: B01D 53/86, C04B 7/36

(54) **KATALYSATORVORRICHTUNG ZUR REDUZIERUNG VON SCHADSTOFFEN IN EINEM ABGAS**
CATALYST DEVICE FOR REDUCING POLLUTANTS IN AN EXHAUST GAS
DISPOSITIF CATALYSEUR POUR LA RÉDUCTION DE SUBSTANCES NOCIVES DANS LES GAZ D'ÉCHAPPEMENT

(30) Priorität: 25.08.2017 DE 102017119498
(43) Veröffentlichungstag der Anmeldung: 01.07.2020
(73) Patentinhaber: thyssenkrupp Industrial Solutions AG, 45143 Essen (DE); thyssenkrupp AG, 45143 Essen (DE)
(72) Erfinder: STENDER, Timo, 58730 Fröndenberg (DE); SCHULZ, Dietmar, 59269 Beckum (DE); ZURHOVE, Franz-Josef, 79761 Waldshut-Tiengen (DE); ASSMANN, Björn-Olaf, 59063 Hamm (DE)
(74) Vertreter: thyssenkrupp Intellectual Property GmbH
(86) Internationale Anmeldenummer: PCT/EP2018/072095
(87) Internationale Veröffentlichungsnummer: WO 2019/038152

(56) Entgegenhaltungen:
- EP-A1- 0 234 188
- EP-A1- 0 558 452
- EP-A1- 0 611 591
- US-A1- 2007 189 948

## Beschreibung

Die Erfindung betrifft eine Katalysatorvorrichtung zur Reduzierung von Schadstoffen in einem Abgas, insbesondere in einem Abgas von Industrieanlagen.

Neben der Entstickung von Abgasen gewinnt die Minderung von Kohlenmonoxid (CO) und Kohlenwasserstoffen (THC) zunehmend Bedeutung. Die Minderung von Stickoxiden erfolgt u. a. mittels selektiver katalytischer Reduktion (SCR). An SCR-Katalysatoren findet dabei simultan zur Entstickung auch eine Minderung von THC statt. Die Reduzierung des CO-Gehalts ist aber nicht möglich, da hierfür spezielle Oxidationskatalysatoren erforderlich sind, die in der Regel teure Edelmetalle als aktive Komponenten aufweisen. Der Einsatz derartiger Katalysatoren ist daher mit hohen Kosten verbunden.

Staubhaltige Abgase, wie sie beispielsweise in der Zementindustrie auftreten, haben eine Staubfracht im Bereich von 30 bis 150 mg/Nm³ und mehr. Zur katalytischen Minderung werden daher üblicherweise Wabenkatalysatoren eingesetzt, die ausreichend große Strömungsquerschnitte aufweisen, um Verstopfungen und Staubablagerung zu vermeiden.

Aus der DE 296 23 503 U1 ist eine Anlage zur Reinigung von Abgasen eines Zementdrehrohrofens mit Wärmetauscher bekannt, wobei unmittelbar nach dem Ofen eine Katalysatorvorrichtung angeordnet ist, welche drei katalytisch wirksame Lagen von modulartigem Aufbau umfasst. Zwei Lagen dienen dabei der Reduktion von NOₓ und Oxidation von Kohlenwasserstoffen, während die dritte Lage CO und Kohlenwasserstoffe oxidiert.

Auch die EP 0 558 452 A1 offenbart die Kombination von mindestens einem Katalysator zur Reduktion von NOx mit einem nachgeschalteten Katalysator zur Oxidation von CO.

Der Erfindung liegt nun die Aufgabe zugrunde, eine Katalysatorvorrichtung anzugeben, die sich durch einen hohen Wirkungsgrad bei der Reduzierung von Stickoxiden, Kohlenwasserstoffen und Kohlenmonoxid bei vertretbaren Kosten auszeichnet.

Erfindungsgemäß wird diese Aufgabe durch die Merkmale des Anspruches 1 gelöst.

Die erfindungsgemäße Katalysatorvorrichtung zur Reduzierung von Schadstoffen in einem Abgas weist wenigstens eine Lage eines Entstickungskatalysators zur Minderung von Stickoxiden und wenigstens eine Lage eines dem Entstickungskatalysator nachgeschalteten Oxidationskatalysator zur Minderung von Kohlenmonoxid auf, wobei die wenigstens eine Lage des Entstickungskatalysators und die wenigstens eine Lage des nachgeschalteten Oxidationskatalysators jeweils eine Vielzahl von Strömungskanälen aufweisen. Die Länge der wenigstens einen Lage des Oxidationskatalysators ist dabei geringer als die Länge einer direkt vorgeschalteten Lage des Entstickungskatalysators und die wenigstens eine Lage des Oxidationskatalysators weist eine höhere Anzahl an Strömungskanälen als die erste Lage des Entstickungskatalysators auf.

Durch die verkürzte Länge der wenigstens einen Lage des Oxidationskatalysators können die Kosten für den Oxidationskatalysator entsprechend verringert werden. Um dennoch einen ausreichend hohen Massentransfer (Oxidation des Kohlenmonoxids) zu gewährleisten, wird die Anzahl der Strömungskanäle (pro Einheit der Querschnittsfläche) des Oxidationskatalysators gegenüber der ersten Lage des Entstickungskatalysators erhöht. Durch eine höhere Anzahl der Strömungskanäle pro Querschnittsfläche, wird die für die Oxidation des Kohlenmonoxids wirksame Wandungsfläche der Strömungskanäle entsprechend erhöht. Mit anderen Worten weist die wenigstens eine Lage des nachgeschalteten Oxidationskatalysators eine höhere geometrische oder äußere Oberfläche als die erste Lage des Entstickungskatalysators auf.

Gemäß einer bevorzugten Ausgestaltung der Erfindung wird der Entstickungskatalysator mit wenigstens zwei Lagen, vorzugsweise mit zwei bis fünf Lagen realisiert. Der Oxidationskatalysator besteht hingegen aus einer Lage, kann aber auch zwei bis drei Lagen aufweisen.

Weiterhin kann die Länge der wenigstens einen Lage des Oxidationskatalysators so gewählt werden, dass sie maximal 80% der Länge der direkt vorgeschalteten Lage des Entstickungskatalysators entspricht. Weist der Entstickungskatalysator mehrere Lagen auf, beträgt die Länge aller Lagen des Oxidationskatalysators zweckmäßigerweise maximal 50% der Länge aller Lagen des Entstickungskatalysators.

In einer weiteren Ausgestaltung der Erfindung ist die Anzahl der Strömungskanäle im Oxidationskatalysator um 25 bis 380% höher als die Anzahl der Strömungskanäle in der ersten Lage des Entstickungskatalysators. So kann die erste Lage beispielsweise aus Einheiten 150 x 150 mm mit 10 x 10 bis 13 x 13 Strömungskanälen aufgebaut sein, während die Lage des Oxidationskatalysators Einheiten von 150 x 150 mm mit 13 x 13 bis 19 x 19 Strömungskanälen vorsieht.

Gemäß einer besonderen Ausgestaltung kann der Entstickungskatalysator wenigstens drei Lagen aufweisen, wobei die erste Lage des Entstickungskatalysator kürzer als die zweite Lage ausgebildet ist. Besonders vorteilhaft beträgt dabei das Verhältnis der kürzesten (ersten) Lage des Entstickungskatalysators zur längsten Lage des Entstickungskatalysators weniger als 0,7, höchstvorzugsweise weniger als 0,5. Eine derartige Ausgestaltung hat sich insbesondere bei Abgasen mit hohen Staubgehalten von mehr als 30 mg/Nm³ als vorteilhaft erwiesen. In diesem Zusammenhang wird explizit auf die DE 10 2010 060 104 B4 verwiesen. So kann die Länge für die erste Lage des Entstickungskatalysators der Länge der sich aufgrund der durchströmenden Abgase ergebenen Einlaufturbulenz +/- 25% entsprechen. Durch die verkürzte erste Lage des Entstickungskatalysators wird eine homogenere Staub- und Strömungsverteilung erzeugt, die geringere Staubablagerungsspitzen und infolgedessen geringere Druckverluste in den nachfolgenden Lagen verursacht.

Gerade bei staubhaltigen Abgasen ist eine regelmäßige Abreinigung des Staubes im Bereich der Einströmenden der einzelnen Lagen zweckmäßig. Die einzelnen Lagen des Entstickungskatalysators und des Oxidationskatalysators sind daher zweckmäßigerweise voneinander beabstandet, wobei jede Lage ein Einströmende und ein Ausströmende aufweist und wenigstens eine Reinigungseinrichtung zum Entfernen von Staubablagerungen, beispielsweise ein Staubbläser, vorgesehen ist. Die Reinigungseinrichtung verwendet beispielsweise Druckluft, welche auf das Einströmende der Strömungskanäle gerichtet ist. Da das für die einzelnen Lagen der Katalysatoren verwendete Material aber vergleichsweise weich ist, kommt es dadurch zu einem erhöhten Verschleiß. Es kann daher zweckmäßig sein, wenn die Stirnkanten an den Einströmenden mittels einer Schablone abgeschirmt werden oder diese Stirnkanten gehärtet sind. Prinzipiell können bei einer Katalysatorvorrichtung auch verschiedene Maßnahmen (Härtung der Stirnkanten und Verwendung einer Schablone) zur Anwendung kommen. Es wäre beispielsweise denkbar, dass die Lagen des Entstickungskatalysators beispielsweise gehärtete Stirnkanten und die Lagen des Oxidationskatalysators eine Schablone aufweisen.

Im Bereich des Oxidationskatalysators kann auch vorgesehen werden, dass die dort für die Kohlenstoffmonoxid-Oxidation aufgebrachte, katalytisch aktive Komponente im Bereich der ersten 3 bis 15 cm der Strömungskanäle entweder gar nicht vorhanden ist oder eine geringere Konzentration aufweist, um dadurch die teureren Kosten für die katalytisch aktive Komponente weiter zu senken, zumal die Effizienz des Oxidationskatalysators in seinem turbulenten Einlaufbereich deutlich reduziert wird, wenn ein erhöhter Verschleiß eintritt.

Um einerseits eine hohe Effizienz bei der Entstickung und der Kohlenmonoxidminderung und andererseits vertretbare Kosten zu erreichen, ist es zweckmäßig, wenn das Volumen des Oxidationskatalysators lediglich zwischen 3 und 50%, vorzugsweise zwischen 5 und 30% des Volumens des Entstickungskatalysators beträgt. Das Volumen des Entstickungs- bzw. Oxidationskatalysators wird durch das vom Abgas durchströmbare Volumen aller Strömungskanäle definiert.

Sowohl der Entstickungskatalysator als auch der Oxidationskatalysator umfassen an sich bekannte Katalysatormaterialien. So kann der Oxidationskatalysator insbesondere eine katalytisch aktive Komponente aufweisen, die wenigstens ein Edelmetall umfasst. Beim Entstickungskatalysator kommen insbesondere ein oder mehrere Komponenten, wie Titan, Wolfram und/oder Vanadium, in Betracht.

Jede Lage des Entstickungskatalysators und des Oxidationskatalysators besteht quer zur Strömungsrichtung der Abgase aus mehreren nach Art einer Matrix angeordneten Elementen, die beispielsweise einen Querschnitt von 150 x 150 mm aufweisen. Insgesamt kann der Gesamtquerschnitt einer Lage 8 bis 30 m² und mehr betragen. Die einzelnen Lagen können darüber hinaus jeweils eine Länge im Bereich von 0,5 bis 1,5 m aufweisen, wobei sich die einzelnen Elemente dabei jeweils über die gesamte Länge der jeweiligen Lage erstrecken oder sich aus mehreren, unmittelbar aneinander grenzenden Elementen zusammensetzen.

Anhand der nachfolgenden Beschreibung und der Zeichnung werden weitere Ausgestaltungen der Erfindung näher beschrieben.

In der Zeichnung zeigen
- Fig. 1: eine schematische Darstellung der Katalysatorvorrichtung bei einer Zementklinkerherstellungsanlage,
- Fig. 2: eine vergrößerte Darstellung der Katalysatorvorrichtung,
- Fig. 3: eine schematische Längsschnittdarstellung durch eine Katalysatorlage,
- Fig. 4a-4d: Querschnittsdarstellungen der verschiedenen Lagen der Katalysatorvorrichtung gemäß Fig.2,
- Fig. 5: eine schematische Seitenansicht einer Katalysatorlage mit übereinander gestapelten Elementen,
- Fig. 6: eine schematische Darstellung eines Elements mit Schutz des Einströmendes durch eine Schablone
- Fig. 7: Draufsicht eines Elements mit gehärteten Stirnkanten und
- Fig.8: Längsschnittdarstcllung eines Strömungskanals mit partieller Aufbringung einer katalytisch aktiven Komponente.

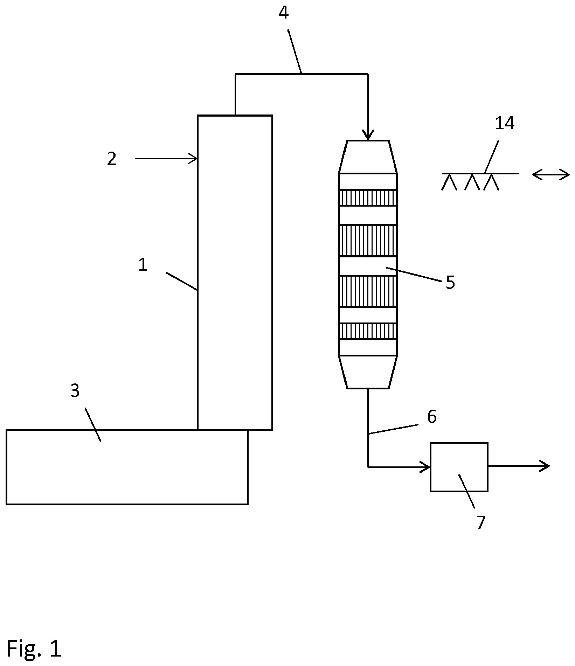

Fig. 1 zeigt eine Anlage der Zementindustrie mit einem Vorwärmer 1 zum Vorwärmen von Zementrohmehl 2 und einen Ofen 3, insbesondere einen Drehrohrofen, zum Fertigbrennen des vorgewärmten Zementrohmehls. Selbstverständlich kann zwischen dem Vorwärmer 1 und dem Ofen 3 auch ein Calcinator zum Vorcalcinieren des vorgewärmten Zementrohmehls vorgesehen werden.

Die bei der Verbrennung im Ofen 3 und im ggf. vorhandenen Calcinator entstehenden Abgase durchströmen den Vorwärmer 1 und erwärmen dabei das Zementrohmehl 2. Die aus dem Vorwärmer 1 am oberen Ende austretenden Abgase 4 weisen beispielsweise einen Staubgehalt von 30 bis 150 mg/Nm³ und eine Temperatur von 250 bis 450 °C auf. Die Abgase 4 durchströmen im Folgenden eine Katalysatorvorrichtung 5 und werden dort in ihrem Schadstoffgehalt reduziert, wobei insbesondere eine Minderung von Stickoxiden und von Kohlenmonoxid stattfindet. Dabei entsteht ein im Schadstoffgehalt reduziertes Abgas 6, welches einer weiteren Schadstoffreinigung unterzogen, einer weiteren Behandlung (z.B. Kühlung) zugeführt, oder alternativ gleich in die Atmosphäre abgeleitet oder anderweitig verwendet werden kann. Der Gastransport durch die gesamte Anlage wird mit Hilfe eines der Katalysatorvorrichtung 5 nachgeschalteten Ventilator 7 bewirkt.

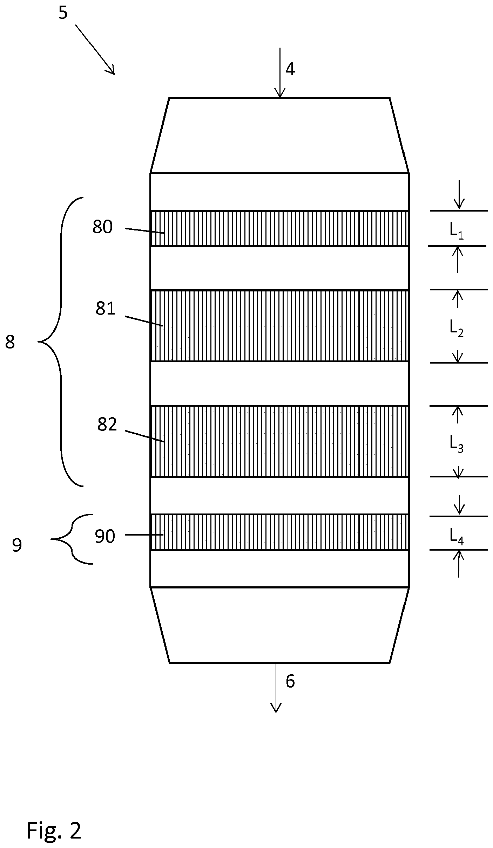

Die in Fig. 2 beispielshaft dargestellte Katalysatorvorrichtung 5 weist einen aus drei Lagen 80, 81, 82 bestehenden Entstickungskatalysator 8 zur Minderung von Stickoxiden auf, nämlich eine erste Lage 80, eine zweite Lage 81 und eine dritte Lage 82. Dem Entstickungskatalysator 8 ist in Strömungsrichtung der Abgase 4 ein Oxidationskatalysator 9 mit lediglich einer ersten Lage 90 nachgeschaltet.

Die Katalysatorvorrichtung 5 wird im dargestellten Ausführungsbeispiel von den Abgasen 4 von oben nach unten durchströmt. Prinzipiell ist aber auch eine umgekehrte Strömungsrichtung oder eine horizontale Anordnung denkbar. Bei einer Anlage zur Herstellung von Zementklinker kommen die Abgase jedoch am oberen Ende des Vorwärmers 1 heraus, sodass sich eine Durchströmung der Katalysatorvorrichtung von oben nach unten anbietet, um den Bauaufwand der Anlage nicht weiter zu erhöhen.

Die erste Lage 80 des Entstickungskatalysators 8 beträgt L₁ und ist kürzer als die Längen L₂, L₃ der zweiten und dritten Lage 81, 82 ausgebildet. Die Längen L₂, L₃ können dabei gleich lang gewählt werden, wobei die Länge L₁ vorzugsweise kürzer als 70% der Länge L₂ bzw. L₃ ist. Die erste Lage 80 des Entstickungskatalysators 8 kann insbesondere eine Länge L₁ aufweisen, die der Länge der sich aufgrund der durchströmenden Abgase 4 ergebenden Einlaufturbulenz +/- 25% entspricht. Durch die erste Lage 80 des Entstickungskatalysators 8 erfolgt somit eine Gleichrichtung und Homogenisierung der Abgase 4, sodass sich auch die Staubablagerungen und die damit einhergehenden Probleme bei den nachfolgenden Lagen 81, 82 des Entstickungskatalysators 8 deutlich reduzieren. Bezüglich der reduzierten Länge der ersten Lage 80 und den damit verbundenen Vorteilen wird explizit auf die DE 10 2010 060 104 B1 verwiesen.

Die erste und einzige Lage 90 des Oxidationskatalysators 9 weist eine Länge L₄ auf, die geringer ist als die Länge L₃ direkt vorgeschaltete dritte Lage 82 des Entstickungskatalysators 8. Vorzugsweise beträgt das Verhältnis L₄/L₃ ≤ 0,8. Des Weiteren ist es vorteilhaft, wenn die Länge L4 der ersten Lage 90 des Oxidationskatalysators 9 maximal 50% der Summe der Länge L₁, L₂ und L₃ beträgt.

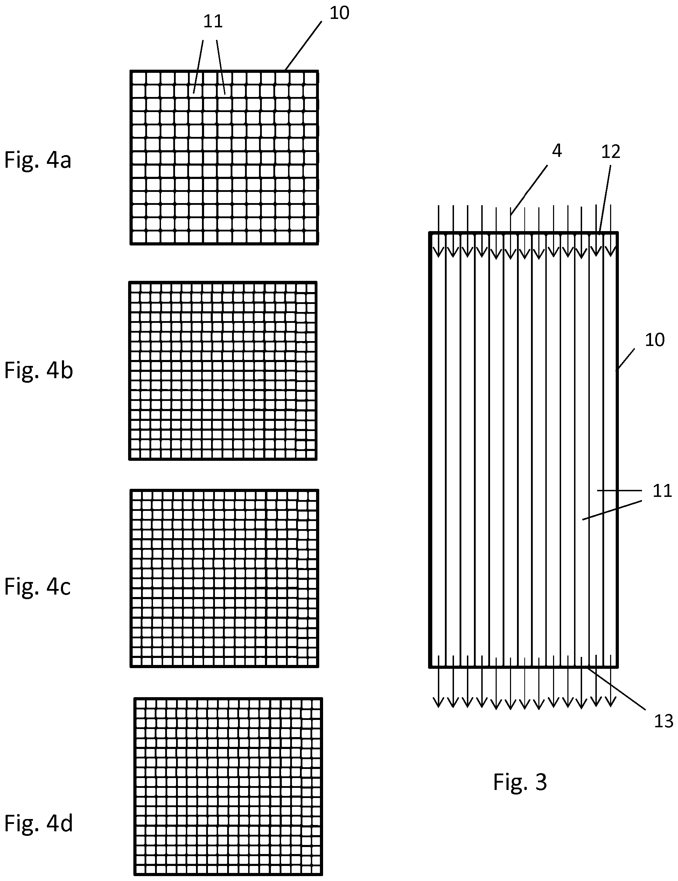

Die für die Schadstoffminderung erforderliche Querschnittsfläche der verschiedenen Lagen des Entstickungskatalysators 8 und des Oxidationskatalysators 9 hängt primär von der Menge des anfallenden Abgases 4 ab. Jede Lage der beiden Katalysatoren setzt sich jeweils aus einer Vielzahl von einzelnen Elementen zusammen. In Fig. 3 ist ein solches Element 10 dargestellt. Jedes Element 10 weist eine Vielzahl von Strömungskanälen 11 auf, die sich von einem Einströmende 12 zu einem Ausströmende 13 erstrecken und vom Abgas 4 durchströmt werden. Bei den staubhaltigen Abgasen der Zementindustrie kommen typischerweise Elemente 10 mit einem Querschnitt von 150 x 150 mm² zur Anwendung, wobei die Elemente 10 im staubbeladenen Abgas typischerweise 10 x 10 bis 19 x 19 Strömungskanäle aufweisen. Prinzipiell wären aber auch andere Dimensionierungen (Querschnitt und Anzahl der Strömungskanäle) denkbar.

Fig. 4a stellt beispielsweise den Querschnitt durch ein Element 10 der ersten Lage 80 des Entstickungskatalysators 8 dar, das 13 x 13 Strömungskanäle 11 vorsieht. In den Fig. 4b, 4c und 4d ist jeweils ein Schnitt durch die zweite Lage 81, die dritte Lage 82 des Entstickungskatalysators 8 und die Lage 90 des Oxidationskatalysators 9 dargestellt, die jeweils 18 x 18 Kanäle aufweisen. Die Wandungen der Strömungskanäle, mit denen die Abgase 4 in Kontakt kommen, stellen die für die Reduktion der Schadstoffe wirksame Oberfläche dar. Bei einer Einheit 10 mit einer größeren Anzahl an Strömungskanälen (bei gleichem Querschnitt) ist somit auch die für die Reduktion der Schadstoffe wirksame Oberfläche entsprechend erhöht.

Im Ausführungsbeispiel gemäß den Fig. 4a - 4d weist die erste Lage 90 des Oxidationskatalysators 9 die gleiche Anzahl an Strömungskanälen 11 pro Flächeneinheit wie die zweite und dritte Lage 81, 82 des Entstickungskatalysators 8 auf. Gemäß einer weiteren Ausgestaltung der Erfindung kann es jedoch auch vorteilhaft sein, wenn die wenigstens eine erste Lage 90 des Oxidationskatalysators 9 eine höhere Anzahl an Strömungskanälen pro Flächeneinheit aufweist als jede der Lagen des Entstickungskatalysators 8. Wenngleich durch die Erhöhung der Anzahl der Strömungskanäle auch die für die Reduktion wirksame Fläche entsprechend vergrößert wird, muss man jedoch eine erhöhte Verstopfungsgefahr in Kauf nehmen, die durch die im Querschnitt immer kleiner werdenden Strömungskanäle 11 bedingt ist. Diese Verstopfungsgefahr müsste wiederum durch eine entsprechende höhere Leistung des Ventilators 7 ausgeglichen werden. Es hat sich daher als vorteilhaft herausgestellt, wenn bei einer Einheit von 150 x 150 mm nicht mehr als 18 x 18 Strömungskanäle vorhanden sind.

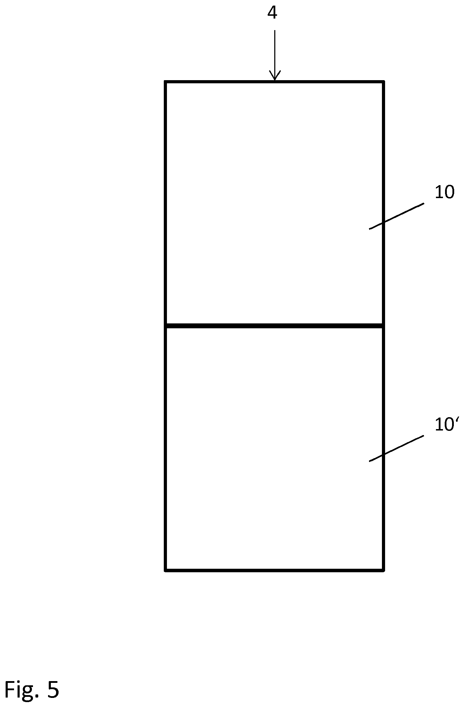

Prinzipiell kann sich das Element 10 über die gesamte Länge der jeweiligen Lage des Katalysators erstrecken, wie dies in Fig. 3 dargestellt ist. Es ist aber auch durchaus denkbar, dass sich eine Lage jeweils aus zwei oder mehr übereinander gestapelten Elementen 10, 10' zusammensetzt, wie in Fig. 5 schematisch dargestellt ist. Zwischen den einzelnen Lagen des Katalysators ist zweckmäßigerweise ein Abstand vorgesehen, der die Verwendung einer an sich bekannten Reinigungsvorrichtung 14 (Fig. 1) ermöglicht, die beispielsweise durch einen Staubbläser gebildet wird, um etwaige Staubablagerungen im Bereich der Einströmenden 12 der einzelnen Lagen zu entfernen. Das für den Entstickungskatalysator 8 bzw. den Oxidationskatalysator 9 verwendeten Material ist oftmals relativ weich, sodass es durch die Reinigungsvorrichtung zur Beschädigungen der Katalysatoren im Bereich ihrer Einströmenden 12 kommen kann.

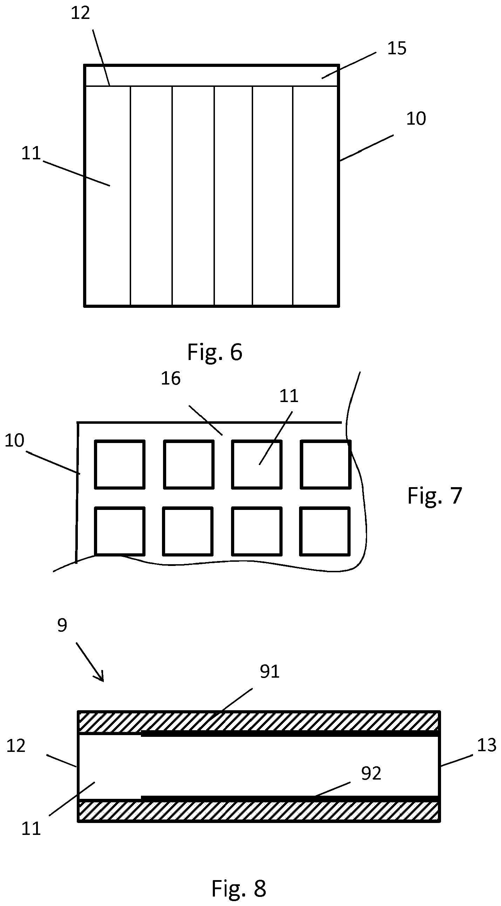

Fig. 6 zeigt ein Ausführungsbeispiel, bei dem das Einströmende 12 des Elements 10 mit einer Schablone 15 geschützt ist, welche lediglich die Stirnkanten 16 (siehe Fig. 7) der Strömungskanäle 11 abdeckt, sodass das Abgas 4 ungehindert einströmen kann. Die Schablone 15 besteht aus einem geeigneten Verschleißschutzmaterial.

Fig. 7 zeigt eine Draufsicht auf ein Element 10 im Bereich des Einströmendes 12 aus der die Stirnkanten 16 ersichtlich sind. Alternativ zu einer dieser Stirnkanten 16 abdeckenden Schablone 15 (Fig. 6) wäre es auch denkbar, dass diese Stirnkanten 16 in geeigneter Weise gehärtet werden. Hierfür bieten sich insbesondere eine Beschichtung mit Monoaluminiumphosphat an.

Fig. 8 zeigt eine vergrößerte Darstellung eines sich vom Einströmende 12 zum Ausströmende 13 erstreckenden Strömungskanals 11 des Oxidationskatalysators 9. Die Strömungskanäle 11 werden üblicherweise durch ein keramisches Trägermaterial 91 gebildet. Auf diesem Trägermaterial 91 ist eine katalytisch aktive Komponente 92, insbesondere wenigstens ein Edelmetall, aufgebracht, wobei im Bereich der ersten 3 bis 15 cm der Strömungskanäle noch keine oder nur eine (um wenigstens 50%) geringere Konzentration der katalytisch aktiven Komponente 92 aufgebracht wird. Je nach Art des Trägermaterials 91 kann hierbei auch ein zusätzlicher Schutz des Einströmendes 12 vor der abrasiven Wirkung der Reinigungsvorrichtung 14 vorgesehen werden.

Nachfolgend wird anhand eine Beispiels die Dimensionierung einer Katalysatorvorrichtung 5 aufgezeigt: Bei einer Anlage zur Herstellung von Zementklinker können beispielsweise 200.000 Nm3/h an Abgasen 4 anfallen. Die Temperatur des Abgases 4 nach dem Vorwärmer kann dabei 350°C +/-20°C betragen, wobei die Abgase 4 mit einer Geschwindigkeit von etwa 3,5 m/s mit Hilfe des Ventilators 7 durch die Katalysatorvorrichtung 5 gezogen werden. Die Länge L₁ der ersten Lage 80 des Entstickungskatalysators 8 beträgt beispielsweise 0,6 m und weist darüber hinaus ein Volumen von 22 m³ auf. Die zweite und dritte Lage 81, 82 des Entstickungskatalysators 8 sind mit einer Länge von 1,2 m und einem Volumen von etwa 90 m³ deutlich größer. Die erste Lage 90 des Oxidationskatalysators 9 weist wiederum eine Länge von 0,6 m und ein Volumen von beispielsweise 22 m³ auf.

## Patentansprüche

1. Katalysatorvorrichtung (5) zur Reduzierung von Schadstoffen in einem Abgas (4) mit wenigstens einer Lage (80, 81, 82) eines Entstickungskatalysators (8) zur Minderung von Stickoxiden und wenigstens einer Lage (90) eines dem Entstickungskatalysator (8) nachgeschalteten Oxidationskatalysators (9) zur Minderung von Kohlenmonoxid, wobei die wenigstens eine Lage (80, 81, 82) des Entstickungskatalysators (8) und die wenigstens eine Lage (90) des nachgeschalteten Oxidationskatalysators (9) jeweils eine Vielzahl von Strömungskanälen (11) aufweist,
**dadurch gekennzeichnet, dass** die Länge (l₄) der wenigstens einen Lage (90) des Oxidationskatalysators (9) geringer als die Länge (l₃) einer direkt vorgeschalteten Lage (82) des Entstickungskatalysators (8) ist und die wenigstens eine Lage (90) des Oxidationskatalysators (9) eine höhere Anzahl an Strömungskanälen (11) als die erste Lage (80) des Entstickungskatalysators (8) aufweist.

2. Katalysatorvorrichtung nach Anspruch 1, **dadurch gekennzeichnet, dass** der Entstickungskatalysator (8) aus wenigstens zwei Lagen (80, 81, 82), vorzugsweise aus zwei bis fünf Lagen besteht.

3. Katalysatorvorrichtung nach Anspruch 1, **dadurch gekennzeichnet, dass** der Oxidationskatalysator (9) aus wenigstens einer Lage (90), vorzugsweise aus ein bis drei Lagen besteht.

4. Katalysatorvorrichtung nach Anspruch 1, **dadurch gekennzeichnet, dass** die Länge (L₄) der wenigstens einen Lage (90) des Oxidationskatalysators (9) maximal 80% der Länge (L₃) der direkt vorgeschalteten Lage (82) des Entstickungskatalysators (8) beträgt.

5. Katalysatorvorrichtung nach Anspruch 1, **dadurch gekennzeichnet, dass** die Länge aller Lagen (90) des Oxidationskatalysators (9) maximal 50% der Länge aller Lagen (80, 81, 82) des Entstickungskatalysators (8) beträgt.

6. Katalysatorvorrichtung nach Anspruch 1, **dadurch gekennzeichnet, dass** die Anzahl der Strömungskanäle (11) im Oxidationskatalysator (9) um 25 bis 380% höher als die Anzahl der Strömungskanäle in der ersten Lage (80) des Entstickungskatalysators (8) ist.

7. Katalysatorvorrichtung nach Anspruch 1, **dadurch gekennzeichnet, dass** der Entstickungskatalysator (8) wenigstens drei Lagen (80, 81, 82) aufweist, wobei die erste Lage (80) des Entstickungskatalysator (8) kürzer als die zweite Lage (81) ausgebildet ist.

8. Katalysatorvorrichtung nach Anspruch 1, **dadurch gekennzeichnet, dass** die Strömungskanäle (11) der wenigstens einen Lage (90) des Oxidationskatalysators (9) ein Einströmende (12) und ein Ausströmende (13) für das Abgas (4) aufweisen und für die Kohlenstoffmonoxid-Oxidation eine katalytisch aktive Komponente (92) aufweisen, wobei im Bereich der ersten 3 bis 15 cm der Strömungskanäle (11) im Bereich des Einströmendes (12) keine oder eine geringere Konzentration der katalytisch aktiven Komponente (92) vorgesehen ist.

9. Katalysatorvorrichtung nach Anspruch 1, **dadurch gekennzeichnet, dass** die Strömungskanäle (11) der wenigstens einen Lage des Oxidationskatalysators (9) und/ oder des Entstickungskatalysators (8) ein Einströmende (12) und ein Ausströmende (13) für das Abgas (4) aufweisen, wobei die Strömungskanäle (11) am Einströmende (12) Stirnkanten (16) aufweisen, die gehärtet sind.

10. Katalysatorvorrichtung nach Anspruch 1, **dadurch gekennzeichnet, dass** die Strömungskanäle (11) der wenigstens einen Lage des Oxidationskatalysators (9) und/ oder des Entstickungskatalysators (8) ein Einströmende (12) und ein Ausströmende (13) für das Abgas (4) aufweisen, wobei die Strömungskanäle (11) am Einströmende (12) Stirnkanten (16) aufweisen, die mittels einer Schablone (15) abgeschirmt sind.

11. Katalysatorvorrichtung nach Anspruch 1, **dadurch gekennzeichnet, dass** der Oxidationskatalysator (9) eine katalytisch aktive Komponente (92) aufweist, die wenigstens ein Edelmetall umfasst.

12. Katalysatorvorrichtung nach Anspruch 1, **dadurch gekennzeichnet, dass** der Entstickungskatalysator (8) insbesondere eine oder mehrere der nachfolgenden Komponenten, nämlich Titan, Wolfram und/oder Vanadium umfasst.

13. Katalysatorvorrichtung nach Anspruch 1, **dadurch gekennzeichnet, dass** die einzelnen Lagen des Entstickungskatalysators (8) und des Oxidationskatalysators (9) voneinander beabstandet sind, wobei jede Lage ein Einströmende (12) und ein Ausströmende (13) aufweist und wenigstens eine Reinigungseinrichtung (14) zur Entfernung von Staubablagerungen im Bereich der Einströmenden (12) vorgesehen ist.

14. Katalysatorvorrichtung nach Anspruch 1, **dadurch gekennzeichnet, dass** sich die Lagen des Entstickungskatalysators (8) und des Oxidationskatalysators (9) jeweils aus mehreren Elementen (10) zusammensetzen, die sich jeweils über die gesamte Länge der jeweiligen Lage erstrecken oder die aus mehreren, unmittelbar aneinandergrenzenden Elementen (10, 10') zusammengesetzt sind.

## Claims

1. Catalyst apparatus (5) for reducing pollutants in an offgas (4), comprising at least one layer (80, 81, 82) of a deNOx catalyst (8) for decreasing nitrogen oxides and at least one layer (90) of an oxidation catalyst (9) for decreasing carbon monoxide located downstream of the deNOx catalyst (8), wherein the at least one layer (80, 81, 82) of the deNOx catalyst (8) and the at least one layer (90) of the downstream oxidation catalyst (9) each have a multiplicity of flow channels (11),
**characterized in that** the length (l₄) of the at least one layer (90) of the oxidation catalyst (9) is smaller than the length (l₃) of a directly preceding layer (82) of the deNOx catalyst (8) and the at least one layer (90) of the oxidation catalyst (9) has a greater number of flow channels (11) than the first layer (80) of the deNOx catalyst (8).

2. Catalyst apparatus according to Claim 1, **characterized in that** the deNOx catalyst (8) consists of at least three layers (80, 81, 82), preferably from two to five layers.

3. Catalyst apparatus according to Claim 1, **characterized in that** the oxidation catalyst (9) consists of at least one layer (90), preferably from one to three layers.

4. Catalyst apparatus according to Claim 1, **characterized in that** the length (L₄) of the at least one layer (90) of the oxidation catalyst (9) is not more than 80% of the length (L₃) of the directly preceding layer (82) of the deNOx catalyst (8).

5. Catalyst apparatus according to Claim 1, **characterized in that** the length of all layers (90) of the oxidation catalyst (9) is not more than 50% of the length of all layers (80, 81, 82) of the deNOx catalyst (8).

6. Catalyst apparatus according to Claim 1, **characterized in that** the number of flow channels (11) in the oxidation catalyst (9) is from 25 to 380% higher than the number of the flow channels in the first layer (80) of the deNOx catalyst (8).

7. Catalyst apparatus according to Claim 1, **characterized in that** the deNOx catalyst (8) has at least three layers (80, 81, 82), wherein the first layer (80) of the deNOx catalyst (8) is shorter than the second layer (81).

8. Catalyst apparatus according to Claim 1, **characterized in that** the flow channels (11) of the at least one layer (90) of the oxidation catalyst (9) have an inflow end (12) and an outflow end (13) for the offgas (4) and for the oxidation of carbon monoxide have a catalytically active component (92), wherein no concentration or a relatively low concentration of the catalytically active component (92) is provided in the region of the first 3-15 cm of the flow channels (11) in the region of the inflow end (12).

9. Catalyst apparatus according to Claim 1, **characterized in that** the flow channels (11) of the at least one layer of the oxidation catalyst (9) and/or of the deNOx catalyst (8) have an inflow end (12) and an outflow end (13) for the offgas (4), wherein the flow channels (11) have end faces (16) which are hardened at the inflow end (12).

10. Catalyst apparatus according to Claim 1, **characterized in that** the flow channels (11) of the at least one layer of the oxidation catalyst (9) and/or of the deNOx catalyst (8) have an inflow end (12) and an outflow end (13) for the offgas (4), wherein the flow channels (11) have end faces (16) which are shielded by means of a template (15) at the inflow end (12).

11. Catalyst apparatus according to Claim 1, **characterized in that** the oxidation catalyst (9) has a catalytically active component (92) which comprises at least one noble metal.

12. Catalyst apparatus according to Claim 1, **characterized in that** the deNOx catalyst (8) comprises, in particular, one or more of the following components, namely titanium, tungsten and/or vanadium.

13. Catalyst apparatus according to Claim 1, **characterized in that** the individual layers of the deNOx catalyst (8) and of the oxidation catalyst (9) are spaced from one another, wherein each layer has an inflow end (12) and an outflow end (13) and at least one purification device (14) for removing dust deposits in the region of the inflow ends (12) is provided.

14. Catalyst apparatus according to Claim 1, **characterized in that** the layers of the deNOx catalyst (8) and of the oxidation catalyst (9) are each made up of a plurality of elements (10) which each extend over the total length of the respective layer or are made up of a plurality of directly adjoining elements (10, 10').

## Revendications

1. Dispositif catalytique (5) destiné à réduire les polluants dans un gaz d'échappement (4), ledit dispositif comprenant au moins une couche (80, 81, 82) d'un catalyseur de dénitrification (8) destiné à réduire les oxydes d'azote et au moins une couche (90) d'un catalyseur de dénitrification (8) monté en aval du catalyseur d'oxydation (9) et destiné à réduire le monoxyde de carbone, l'au moins une couche (80, 81, 82) du catalyseur de dénitrification (8) et l'au moins une couche (90) du catalyseur d'oxydation (9) monté aval comportant chacune une pluralité de canaux d'écoulement (11),
**caractérisé en ce que** la longueur (l₄) de l'au moins une couche (90) du catalyseur d'oxydation (9) est inférieure à la longueur (l₃) d'une couche (82), située directement en amont, du catalyseur de dénitrification (8) et l'au moins une couche (90) du catalyseur d'oxydation (9) comporte un plus grande nombre de canaux d'écoulement (11) que la première couche (80) du catalyseur de dénitrification (8).

2. Dispositif catalytique selon la revendication 1, **caractérisé en ce que** le catalyseur de dénitrification (8) comprend au moins deux couches (80, 81, 82), de préférence deux à cinq couches.

3. Dispositif catalytique selon la revendication 1, **caractérisé en ce que** le catalyseur d'oxydation (9) comprend au moins une couche (90), de préférence une à trois couches.

4. Dispositif catalytique selon la revendication 1, **caractérisé en ce que** la longueur (L₄) de l'au moins une couche (90) du catalyseur d'oxydation (9) est égale au maximum à 80 % de la longueur (L₃) de la couche (82), située directement en amont, du catalyseur de dénitrification (8).

5. Dispositif catalytique selon la revendication 1, **caractérisé en ce que** la longueur de toutes les couches (90) du catalyseur d'oxydation (9) est égale au maximum à 50 % de la longueur de toutes les couches (80, 81, 82) du catalyseur de dénitrification. (8).

6. Dispositif catalytique selon la revendication 1, **caractérisé en ce que** le nombre de canaux d'écoulement (11) dans le catalyseur d'oxydation (9) est supérieur de 25 à 380 % au nombre de canaux d'écoulement dans la première couche (80) du catalyseur de dénitrification. (8) .

7. Dispositif catalytique selon la revendication 1, **caractérisé en ce que** le catalyseur de dénitrification (8) comporte au moins trois couches (80, 81, 82), la première couche (80) du catalyseur de dénitrification (8) étant plus courte que la deuxième couche (81).

8. Dispositif catalytique selon la revendication 1, **caractérisé en ce que** les canaux d'écoulement (11) de l'au moins une couche (90) du catalyseur d'oxydation (9) comportent une extrémité d'entrée d'écoulement (12) et une extrémité de sortie d'écoulement (13) destinées au gaz d'échappement (4) et un composant catalytiquement actif (92) destiné à l'oxydation du monoxyde de carbone, aucune concentration ou une concentration moindre du composant catalytiquement actif (92) n'étant prévue dans la zone des 3 à 15 premiers cm des canaux d'écoulement (11) dans la zone de l'extrémité d'entrée d'écoulement (12).

9. Dispositif catalytique selon la revendication 1, **caractérisé en ce que** les canaux d'écoulement (11) de l'au moins une couche du catalyseur d'oxydation (9) et/ou du catalyseur de dénitrification (8) comportent une extrémité d'entrée d'écoulement (12) et une extrémité de sortie d'écoulement (13) destinées au gaz d'échappement (4), les canaux d'écoulement (11) comportant à l'extrémité d'entrée d'écoulement (12) des bords frontaux (16) qui sont durcis.

10. Dispositif catalytique selon la revendication 1, **caractérisé en ce que** les canaux d'écoulement (11) de l'au moins une couche du catalyseur d'oxydation (9) et/ou du catalyseur de dénitrification (8) comportent une extrémité d'entrée d'écoulement (12) et une extrémité de sortie d'écoulement (13) destinées au gaz d'échappement (4), les canaux d'écoulement (11) comportant à l'extrémité d'entrée d'écoulement (12) des bords frontaux (16) qui sont protégés au moyen d'un gabarit (15).

11. Dispositif catalytique selon la revendication 1, **caractérisé en ce que** le catalyseur d'oxydation (9) comporte un composant catalytiquement actif (92) qui comprend au moins un métal noble.

12. Dispositif catalytique selon la revendication 1, **caractérisé en ce que** le catalyseur de dénitrification (8) comprend notamment un ou plusieurs des composants suivants, à savoir le titane, le tungstène et/ou le vanadium.

13. Dispositif catalytique selon la revendication 1, **caractérisé en ce que** les couches individuelles du catalyseur de dénitrification (8) et du catalyseur d'oxydation (9) sont espacées les unes des autres, chaque couche comportant une extrémité d'entrée d'écoulement (12) et une extrémité de sortie d'écoulement (13) et au moins un dispositif de nettoyage (14) étant prévu pour éliminer les dépôts de poussière dans la région des extrémités d'entrée d'écoulement (12).

14. Dispositif catalytique selon la revendication 1, **caractérisé en ce que** les couches du catalyseur de dénitrification (8) et du catalyseur d'oxydation (9) comprennent chacune plusieurs éléments (10) qui s'étendent chacun sur toute la longueur de la couche respective ou qui comprennent plusieurs éléments (10, 10') directement adjacents.
